# EUROPEAN PATENT APPLICATION

(11) **EP 1 926 283 A1**
(43) Date of publication of application: **28.05.2008**
(21) Application number: 07290332.1
(22) Date of filing: 19.03.2007
(51) Int. Cl.: H04L 29/06, H04L 12/28

(54) **Data communications**

(30) Priority: 27.11.2006 EP 06291826
(71) Applicant: France Télécom, 75015 Paris (FR)
(72) Inventor: Fuccellaro, Jean-Louis, 75015 Paris (FR); Antoine, Stephane, 75015 Paris (FR)
(74) Representative: Spaargaren, Jerome

(57) **Abstract**

This invention relates to methods for controlling a mobile node in a data communications network. A mobile node may include different radio interfaces for communicating user data traffic and mobility protocol data traffic via different radio access technologies. One radio interface may be preferentially selected over another radio interface for the purpose of communicating user data traffic, in response to a trigger indicating that there is a change in the user data traffic to be communicated, whilst there remains mobility protocol data traffic to be communicated. This allows the continued communication of mobility protocol data traffic, for example to maintain a registration condition of a mobile node, whilst avoiding wastage of power resources on the mobile node. The power to each of the radio interfaces may be switched according to the amount of user data traffic being communicated to and from an application running on the mobile node.

## Description

### Field of the Invention

The present invention relates to a method of controlling a mobile node in a data communications network including a plurality of different radio access technologies, and a mobile node for use in such a data communications network.

### Background of the Invention

There are various types of radio access technology with which mobile related services can be provided to mobile user equipment, referred to herein as a mobile node. For example, Global System for Mobiles (GSM) networks provide a facility for data and voice communications via fixed capacity radio communications channels, and include a packet mode service for the communication of internet protocol (IP) data, called the General Packet Radio Service (GPRS). The Universal Mobile Telecommunications System (UMTS) on the other hand provides improved flexibility in affording greater data rates to mobile user equipment whilst still providing a roaming facility made possible by a cellular architecture. On the other hand non-cellular standards such as the Wireless Local Area Network (WLAN) standards, for example one of the IEEE 802.11 wireless communications standards (The 802.11 standards are commonly referred as WiFi™, which is a trademark of the Wifi Alliance), provide a facility for high data rate communications. Such WLANs provide a substantially greater data rate than can currently be provided through cellular mobile radio architectures such as GSM and UMTS.

The Mobile Internet Protocol (MIP), also known more simply as Mobile IP, is a mobility protocol being standardised by the Internet Engineering Task Force (IETF) as described in RFC 3344: C. Perkins, Request for Comments: 3344, August 2002, "IP Mobility Support for IPv4", the contents of which are incorporated herein by reference. MIP enables a mobile node to maintain the continuity of an internet session while moving across and between access networks. MIP requires the mobile node to register periodically with its Home Agent (HA). The MIP registration consists of an exchange of mobility protocol data traffic in the form of Registration Request and Registration Reply messages that establish a MIP tunnel between the MIP mobile node address (its Care of Address) and the HA.

Mobile devices having multiple radio interfaces are known, each interface using a different radio communications technology. Known MIP clients available on such devices integrate a radio interface selection feature that enables a desired prioritisation of radio interfaces. Interfaces can be preconfigured and each preconfigured radio interface is attributed a level of priority. The radio interface which has been attributed the highest level of priority will be used by default to register the MIP client with the HA. If there is no available network associated with the radio interface configured with the highest level of priority, the MIP client will successively attempt to register using radio interfaces of decreasing levels of priority until the registration succeeds on the available radio interface of the highest level of priority.

An MIP client having several radio interfaces available is likely to be configured with the highest bandwidth radio interface as the radio interface with the highest priority. Such a radio interface may for example be the Wifi radio interface. The MIP client may also be configured with other radio interfaces such as a GPRS or UMTS radio interfaces with lower levels of priority. Such configuration choice is intended to select the Wifi radio interface to register and receive/send traffic when the mobile node is in the simultaneous coverage of Wifi and other access networks.

Thus, since a particular radio interface is configured with the highest level of priority, that radio interface will be used by default for both the user data traffic and the mobility protocol data traffic when available. Receiving traffic through the highest bandwidth radio interface typically offers the best Quality of Service (QoS) to the user.

However, some radio interfaces, such as a Wifi radio interface, consume lots of power. Since a mobile device's power resources are limited, this can significantly reduce their battery lifetimes.

### Summary of the Invention

According to a first aspect of the invention there is provided a method of controlling a mobile node in a data communications network including a plurality of different radio access technologies, the mobile node including a first radio interface for communicating via a first radio access technology, and a second radio interface for communicating via a second radio access technology, the mobile node having an application requiring the mobile node to communicate user data traffic with a remote node, said user data traffic being capable of being communicated via both said first radio interface and said second radio interface, wherein the method comprises using a mobility protocol for managing mobility of the mobile node between different access nodes, the mobility protocol requiring communication of mobility protocol data traffic with a network entity, preferentially selecting between said first and second radio interfaces when each of said first and second radio access technologies have coverage available to said mobile node, wherein said method comprises communicating via said first radio interface when there is said user data traffic being communicated, the first radio interface having been selected according to a first preferential selection, and altering the preferential selection from said first radio interface to said second radio interface in response to a trigger indicating a change in said user data traffic being communicated, whilst mobility protocol data traffic remains to be communicated.

By preferentially selecting the second radio interface after preferentially selecting the first radio interface for the purpose of communicating user data traffic, in response to a trigger indicating that there is a reduction of user data traffic to be communicated, this allows the continued communication of mobility protocol data traffic, for example to maintain a registration condition of the mobile node, whilst avoiding wastage of power resources on the mobile node.

Preferably, the first radio interface is deactivated when the second radio interface is preferentially selected in this manner. The first radio interface may for example be deactivated such that future re-selection of the first radio interface for the communication of user data traffic requires re-authentication using the first radio access technology.

The trigger may be a trigger indicating a halt to said user data traffic being communicated.

The trigger is preferably generated in response to the detection of none of said user data traffic being communicated for a period of time after user data traffic has been communicated.

Preferably, the mobility of the mobile node is managed by a MIP client function. The MIP client function may be implemented in software or hardware.

Preferably, the user data traffic being communicated to and from the mobile node is monitored by a monitoring function.

Preferably, the monitoring comprises the monitoring function communicating with the application. Hence, the monitoring function can monitor the amount of user data traffic being communicated via an application running on the mobile node.

Preferably, the trigger is generated by a MIP client function. Hence a MIP client function may generate a trigger according to the amount of user data traffic being communicated to and from the mobile node. A trigger may be generated only when there is a change in the amount of user data traffic being communicated.

Preferably, the trigger generation is in response to an enquiry from the monitoring function. Enquiries may occur at regular intervals in time.

Preferably, the MIP client function is located in the mobile node. Hence, mobility protocol data traffic may be processed by a MIP client function located in the mobile node.

Preferably, the mobility protocol data traffic is capable of being communicated via both the first radio interface and the second radio interface. Hence, when the first interface is being used to communicate user data traffic, mobility data traffic may be communicated via the first radio interface. When the first interface is not being used to communicate user data traffic, mobility data traffic may be communicated via the second radio interface.

Preferably, preferential selection is performed in the mobile node. Hence, decisions as to which radio interface is used on the mobile node can be carried out in the mobile node.

Preferably, a MIP client function is located in a mobility protocol handling node remote to the mobile node. Hence, mobility protocol data traffic can be processed by a MIP client function located in a mobility protocol handling node located in the network.

Preferably, the mobility protocol handling node is responsible for managing the mobility of the mobile node between different access nodes. Hence, a mobility protocol handling node can manage mobility of the mobile node on behalf of the mobile node.

Preferably, the monitoring function is located in the mobility protocol handling node. Hence, the mobility protocol handling node can preferentially select between the radio interfaces of the mobile node according to the monitored user data traffic.

Preferably, preferential selection is performed in the mobility protocol handling node. Hence, decisions as to which radio interface is used on the mobile node may be carried out in the mobility protocol handling node.

Preferably, the mobility protocol handling node communicates with the network entity using a mobility protocol. Hence, the mobility protocol handling node supports a mobility protocol and mobility management of the mobile node can be carried out by communication with the network entity using the mobility protocol.

Preferably, the mobility network node communicates with the mobile node using a different protocol to the mobility protocol. Hence, if a mobile node does not support a mobility protocol, the mobile node can communicate with the mobility protocol handling node using one or more non-mobility protocols, such as the Internet Protocol Control Protocol (IPCP) and/or the Dynamic Host Configuration Protocol (DHCP).

The first radio interface is preferably used to communicate both said mobility protocol data traffic and said user data traffic, when said first radio interface is selected.

According to a second aspect of the invention there is provided a method of controlling a mobile node in a data communications network including a plurality of different radio access technologies, the mobile node including a first radio interface for communicating via a first radio access technology, and a second radio interface for communicating via a second radio access technology, wherein each of said first and second radio interfaces are assigned a priority, indicative of an order in which the radio interfaces are to be selected, the method comprising dynamically updating said priority order in response to a trigger.

According to a third aspect of the invention there is provided a method of controlling a mobile node in a data communications network including a plurality of different radio access technologies, the mobile node including a first radio interface for communicating via a first radio access technology, and a second radio interface for communicating via a second radio access technology, the mobile node having an application requiring the mobile node to communicate user data traffic with a remote node, said user data traffic being capable of being communicated via both said first radio interface and said second radio interface, wherein the method comprises using a mobility protocol for managing mobility of the mobile node between different access nodes, the mobility protocol requiring communication of mobility protocol data traffic with a network entity, at a mobility protocol handling node, monitoring user data traffic being communicated between said mobile node and said remote node, and in response to said monitoring indicating a change in an amount of user data traffic being communicated, transmitting a command from said mobility protocol handling node to said mobile node, said command indicating to said mobile node to switch on or switch off the power to one of said first or second radio interfaces.

Hence the power to a number of radio interfaces on a mobile node can be switched between the different radio interfaces according to the amount of user data traffic being communicated to and from an application running on the mobile node.

The amount of traffic being communicated to and from the mobile node can be monitored in a mobility protocol handling node located in the network remote from the mobile node. When there is a change in the amount of monitored user data traffic, the mobility protocol handling node can send a command to the mobile node to indicate that the power to a radio interface on the mobile node should be switched on or switched off. A radio interface capable of higher data rate communication, for example a higher bandwidth, will tend to have a higher power consumption than a radio interface only capable of lower data rate communication. If higher data rate communication is not required by the mobile node, then using a higher power radio interface can be wasteful in terms of power consumption. It can thus be beneficial to use a radio interface of lower power if that radio interface has an adequate communication data rate for current communication requirements. This can help to more efficiently use power resources which are limited on a mobile node.

Preferably, a further command is transmitted from the mobility protocol handling node, the further command indicating to the mobile node to switch on or switch off the power to the other of the first and second radio interfaces. Hence the mobility protocol can command the mobile node to switch off one radio interface and switch on another radio interface instead.

Preferably, the command and a further command are combined into a single command transmitted from the mobility protocol handling node to the mobile node. Hence, the mobility protocol handling node may send a single command to the mobile node to indicate that it should switch off one radio interface and switch on another instead.

Preferably, the first radio interface is a relatively high power interface compared to the second radio interface. Hence, if using a relatively low power radio interface is adequate for the mobile node's present communication requirements, the relatively low power interface can be used instead of the relatively high power radio interface to help save limited power resources on the mobile node.

Preferably, the change is a reduction or halt in the amount of user data traffic being communicated. Hence, when the amount of user data traffic reduces or halts, using a relatively low power radio interface may be sufficient.

Preferably, the command indicates to the mobile node to switch off the first radio interface. Hence, the relatively high power first radio interface may be switched off when communication at a higher data rate is not required.

Preferably, the command indicates to the mobile node to switch on the second radio interface. Hence, the relatively low power second radio interface may be switched on when communication at a lower data rate is adequate.

Preferably, the change is an increase in the amount of user data traffic being communicated. Hence, when the amount of user data traffic increases, using a relatively low power radio interface may not provide sufficient communication capabilities.

Preferably, the command indicates to said mobile node to switch on said first radio interface. Hence, the relatively high power first radio interface may be switched on when communication at a higher data rate is required.

Preferably, a further command indicates to the mobile node to switch off the second radio interface. Hence, all communication may take place via the first radio interface only.

Preferably, the mobility protocol handling node communicates with the network entity using the mobility protocol. Hence the mobility protocol handling node may communicate mobility protocol data traffic with the network entity using a mobility protocol. The mobility protocol handling node can thus manage mobility on behalf of the mobile node using a mobility protocol such as the Proxy Mobile IPv4 protocol.

Preferably, the mobility protocol handling node communicates with the mobile node using a protocol different to the mobility protocol. The mobile may not support a mobility protocol, so the mobility protocol handling node may communicate with the mobile node in a different protocol. This can help reduce the cost and complexity of mobile nodes, as their hardware and/or software specifications can be simplified.

Preferably, the command and/or the further command are transmitted using the different protocol. Hence, the mobility protocol handling node may send commands to the mobile node in a protocol that the mobile node supports, rather than using a mobility protocol. Such supported protocols may include the Internet Protocol Control Protocol (IPCP) and/or the Dynamic Host Configuration Protocol (DHCP).

According to further aspects of the invention there is provided a mobile node, a mobility protocol handling node, apparatus and computer software adapted to perform the methods of the above aspects.

The above aspects of the invention allow for the re-prioritisation of radio interfaces based on requirements such as power management, whereby power resources may be conserved.

Further aspects, features and advantages of the invention will become apparent from the following description of preferred embodiments of the invention, given by way of example only, which is made with reference to the accompanying drawings.

### Brief Description of the Drawings

Figure 1 shows a data communications network according to an embodiment of the invention.
Figure 2 shows a flow diagram illustrating a mobile node control procedure according to an embodiment of the invention.
Figure 3 is a block diagram showing communication between an interface, a control module, a MIP client and an application on a mobile node according to an embodiment of the invention.
Figure 4 shows a data communications network according to an embodiment of the invention.
Figure 5 is a diagram showing communication message flows for an exemplary registration sequence according to an embodiment of the invention.
Figure 6 is a diagram showing communication message flows for deactivation of a radio interface according to an embodiment of the invention.
Figure 7 is a diagram showing communication message flows for activation of a radio interface according to an embodiment of the invention.

### Detailed Description of the Invention

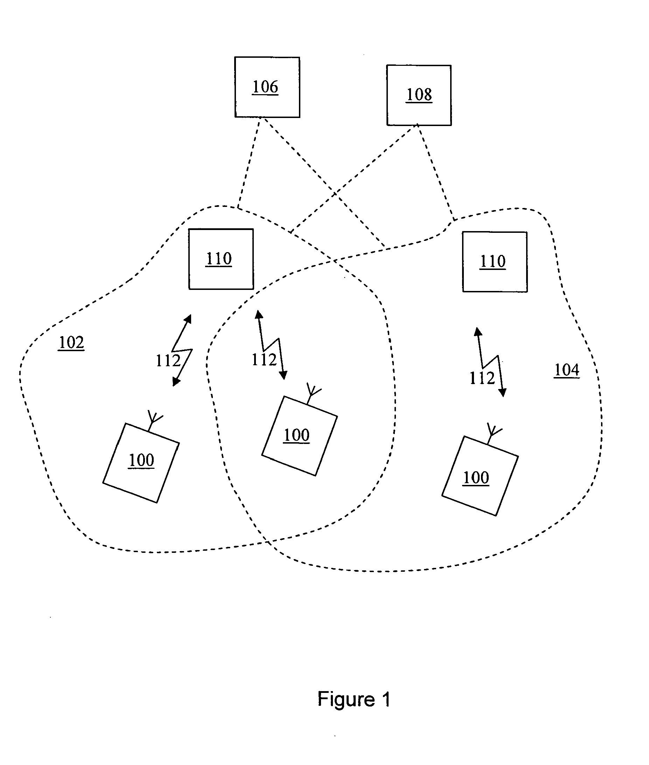

A general system architecture for elements forming a data communications network according to an embodiment of the present invention is illustrated in Figure 1. The exemplary network includes a first access network 102 and a second access network 104, each connected to a common core network beyond. The common core network may for example be the internet. In each access network, 102, 104, network access is provided via a different radio access node 110 across wireless radio links 112.

In Figure 1 a network entity 106, for example a home agent HA, is arranged in the common core network to execute a network layer protocol stack for providing mobile internet protocol support to a set of mobile nodes MN 100. A communications link via which the protocol is provided utilises an internet protocol which is supported over a selected communications channel which may be effected via a number of mobile communications access networks. An application server AS 108 is arranged in the common core network to provide an application layer service to a mobile node MN 100. A communications link via which the service is provided utilises an internet protocol which is supported over a selected communications channel which may be effected via a number of mobile communications access networks.

Each mobile node MN 100 includes a first radio interface for communicating with the first mobile access network, and beyond into the common core network, via a first radio access technology and a second radio interface for communicating with the second mobile access network, and beyond into the common core network, via a second radio access technology.

The first access network 102 may for example operate in accordance with a non-cellular radio wireless communications standard such as a Wifi™ standard whereby network access is provided via a number of different Wifi access points. The second access network 104 may for example operate in accordance with a cellular radio communications standard such as a GSM (including GPRS) standard or a UMTS standard, whereby network access is provided via a number of different cellular radio access nodes. A third access network (not shown) may for example operate in accordance with another communications standard, for example an alternative non-cellular radio communications standard such as a Bluetooth™ standard. In this case, the mobile nodes MN may have first, second and third radio interfaces which implement features corresponding to the standards implemented by the first, second and third access networks, respectively.

As mentioned above, the application server AS 108 manages one or several application layer applications for providing communications services to one or several of the mobile nodes using for example IP communications with the mobile nodes. The mobile nodes MN 100 each have one or more corresponding applications which communicate with entities such as the application server AS 108, which communications take the form of user data traffic communicated between the mobile nodes MN 100 and the application server AS 108. The user data traffic can be communicated via either said first radio interface or said second radio interface.

User data traffic may also comprise data transmitted between an application layer application on a mobile node and an application layer application on another mobile node, using for example IP communications between the mobile nodes.

The user data traffic may for example include one or more types of multi-media content such as multi-media documents, image files, video data, audio data, etc.

As mentioned above, the home agent HA 106 manages one or more network layer applications which implement a mobile internet protocol (MIP) protocol stack. The mobile nodes MN 100 each have a corresponding application which implements a mobile internet protocol (MIP) protocol stack, which application is referred to as a MIP client. Communications between the MIP client and the HA take the form of mobility protocol data traffic communicated between the mobile nodes MN 100 and the home agent HA 106. The mobility protocol data traffic can be communicated via either said first radio interface or said second radio interface.

Embodiments of the present invention provide a facility for controlling mobile nodes to select various access networks in accordance with a selection algorithm. Each of the mobile nodes has a MIP client which is controlled to select the access networks in dependence upon a setting indicating the level of priority attached to the radio access technology implemented by the access network.

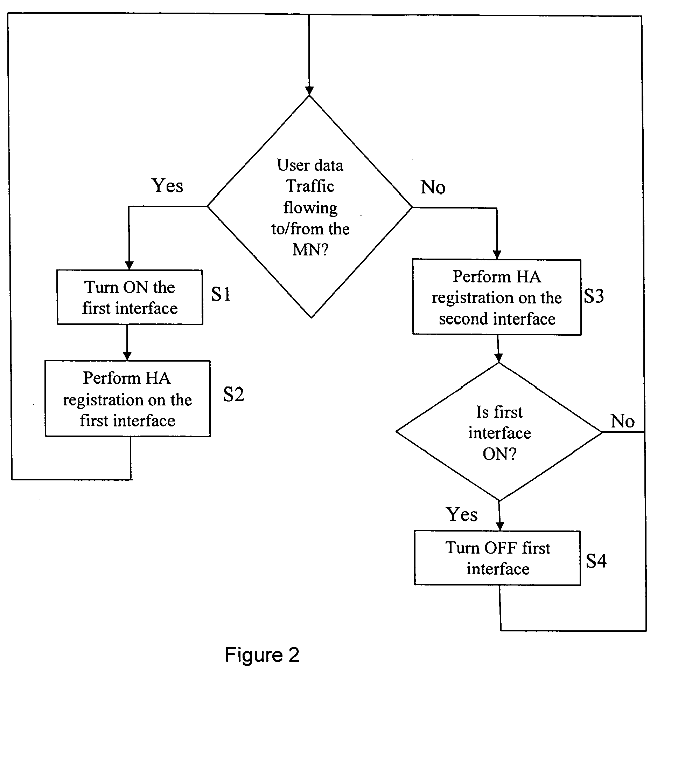

An example operation of a MIP client according to one embodiment of the invention is provided by a flow diagram illustrated in Figure 2.

When the mobile node MN starts a communication or is invited to start an application layer communication with an entity such as the application server AS, or another mobile node MN or other user station, the user data traffic is preferentially routed through MIP and through the first access network.

Thus, the MIP client receives a trigger indicating that user data traffic is being communicated. The first radio interface of the mobile node MN is activated and selected as default radio interface, step S1. Activation typically involves the mobile node authenticating with the first mobile access network.

The mobile node MN then registers with the HA on the first radio interface, step S2, and the user data traffic can be transported in a MIP tunnel ending on the first radio interface.

When the MIP client is not sending or receiving any traffic for a certain period of time, the MIP client receives a trigger indicating that the communication of user data traffic has halted. This may be immediately in response to the halting of the transmission of data by an application on the mobile node, or may be triggered only after a preset delay. In response to this trigger, the MIP client selects the second radio interface to renew its registration with the HA, step S3. The mobile node MN completes its registration through the second radio interface, or possibly any other lower power-consuming radio interfaces. Re-registration may be necessary as a confirmation procedure and may occur at regular intervals.

The relatively high power-consuming first radio interface can then be shut down, step S4, thus saving power resources and significantly extending battery lifetime. The less demanding second radio interface on which MIP has been registered may then stay on for the mobile node MN to be reachable through MIP and to prevent any disruption of flows of data traffic.

If subsequently the MIP client receives a trigger indicating that user data traffic is to be communicated, the first radio interface of the mobile node is reactivated and selected as the default radio interface, returning to step S1. Reactivation typically involves the mobile node re-authenticating with the first mobile access network.

The selection of another radio interface to perform MIP re-registration before, or after, the default radio interface is turned off can be performed by several methods.

In one exemplary method, the priority levels of the different radio interfaces are stored in memory in the form of a look-up table, and a selection algorithm is used to perform selection according to the settings in the table of priority settings. The settings may be user-configured. The method of the invention can be achieved by re-prioritising temporarily the radio interfaces while keeping in memory the initial table of priority settings. Table 1 below shows priority settings assigned initially to different radio interfaces and Table 2 below shows a new priority scheme corresponding to radio interfaces being re-prioritised.

**Table 1: Initial table of priority used when the mobile node is sending/receiving user data traffic.**

| Interface | Level of priority |
|---|---|
| Wifi | 1 |
| Cellular | 2 |
| Other | 3 |

**Table 2: Temporary table of priority when the mobile node is not sending/receiving user data traffic.**

| Interface | Level of priority |
|---|---|
| Wifi | 2 |
| Cellular | 1 |
| Other | 3 |

Table 1 as the initial configuration table is kept in non-volatile memory. When there is no user data traffic, Table 2 applies to enable the MIP client to select the cellular radio interface to send the MIP signalling traffic before the Wifi radio interface is shut down.

Activating or deactivating an interface based on the amount of user data traffic sent from or received at a mobile node may be implemented using a control module located between the interface and a MIP client. The user data traffic flowing to and from the mobile node can be referred to as the user data traffic layer. A MIP client can gain access to the user data traffic layer via the one or more applications running on the mobile node.

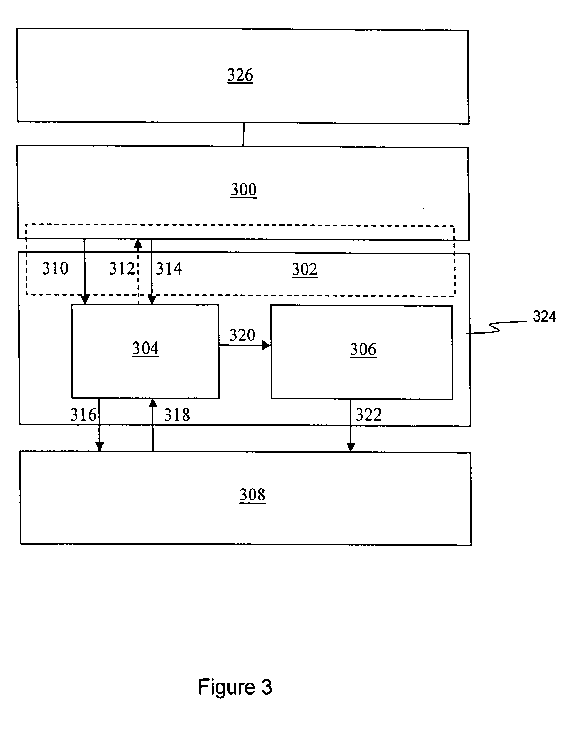

Figure 3 is a block diagram showing an arrangement of a mobile node where a control module 324 is located between interface 308 and MIP client 300, which is able to access application(s) 326. Control module 324 may be organised into three logical parts: a monitoring module 302, a decision module 304 and a command module 306.

The monitoring of the user data traffic layer can be implemented using an enquiry method or by an event notification method, each of which are explained below in turn.

An enquiry method involves enquiring as to the state of the user data traffic layer, for example at regular intervals of time. A 'state request' can be generated by decision module 304 for this purpose. A state request 312 transmitted from decision module 304 to the user data traffic layer 300 will cause a 'state reply' to be generated by the user data traffic layer. State reply 314 is transmitted back from the user data traffic layer, informing decision module 304 of the state of the user data traffic layer. The state can be evaluated during the time that has elapsed between the reception of state request 312 and the transmittal of state reply 314. The time difference that elapses between the reception of a state request and the sending of its associated state reply is at least a value of 'State_Eval_Time' which can be defined as follows:.
- State 1: The user data traffic layer has been sending/receiving data for a period of time = State_Eval_Time
- State 2: The mobility layer has not been sending/receiving data for a period of time = State_Eval_Time

Several consecutive state requests may return the same value for the state of the user data traffic layer. If the state of the user data traffic layer changes between two consecutive state requests, then a state reply can carry that information to decision module 304.

An event notification method can be implemented through the generation of a signal in the user data traffic layer, for example an interrupt signal, informing decision module 304 of a change of state of the user data traffic layer. The event notification signal can be generated when an event of interest occurs in the user data traffic later. Such events of interest may include:
- Event 1: After a certain period of time, without sending/receiving any user data traffic, the mobile node sends/receives some user data traffic
- Event 2: After a certain period of time of activity, the mobile node stops sending/receiving user data traffic

The enquiry and event notification methods can be implemented through a Software Development Kit (SDK) (or 'Devkit') for use with MIP.

When decision module 304 receives an event notification interruption or a state reply informing of a state change from a previous state reply, it queries the state of interface 308 using interface request 316. Interface 308 then replies with interface reply 318.

Decision module 304 takes the decision to turn interface 308 on or off according to a policy decision that achieves the dynamic interface selection described herein. Interface 308 can be turned on or off by decision module sending a command signal to command module 306 which then activates or deactivates interface 308 accordingly 322.

The logic for commanding the interface using the event notification method can be implemented as follows:
Upon Reception of an Event Notification:
   If the Event Notification is Event 1, check state of the interface;
      If State = = OFF, then activate interface (i.e. set interface state to ON);
   If the Event Notification is Event 2, check state of the interface;
      If State = = ON, then deactivate interface (i.e. set interface state to OFF);

The logic for commanding the interface using the enquiry method can be implemented as follows:
When the enquiry method is being used, a decision can be made by the decision module whenever the result of an enquiry is a change of state, either from S1 to S2 or S2 to S1. In this case, the logic for controlling the interface can be implemented as follows:
   If the user data traffic layer state change is from S 1 to S2, check state of the interface;
      If State = = ON, then deactivate interface;
   If the user data traffic layer state change is from S2 to S1, check state of the interface;
      If State = = OFF, then activate interface;

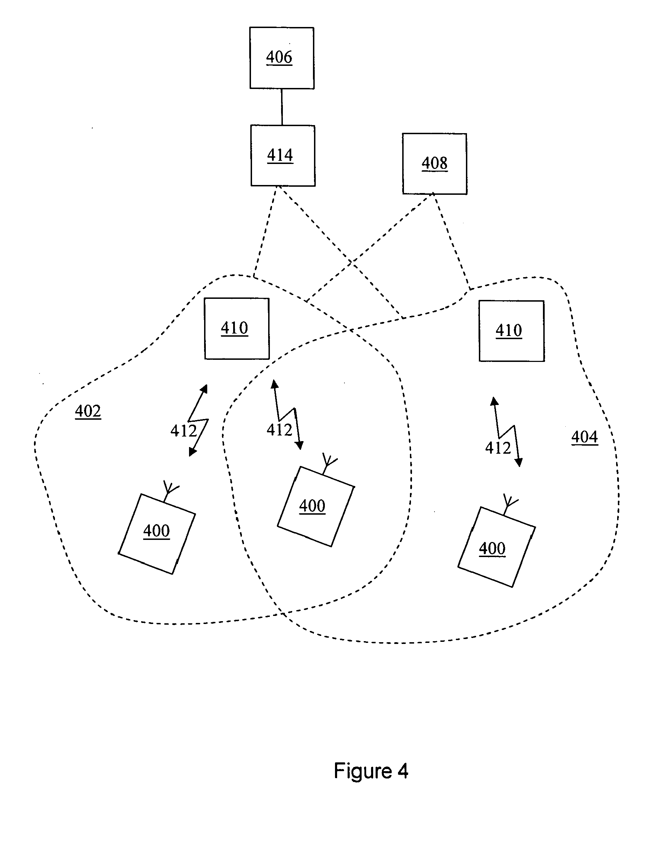

A general system architecture for elements forming a data communications network according to a further embodiment of the present invention is illustrated in Figure 4. As before, the exemplary network includes mobile nodes 400, a first access network 402, a second access network 404, each connected to a common core network beyond, and application server 408. In each access network, 402, 404, network access is provided via a number of different radio access nodes 410 across wireless radio links 412. An application server AS 408 is arranged in the common core network to provide an application layer service to a mobile node MN 100. Each mobile node MN 100 includes a first radio interface for communicating with the first mobile access network, and beyond into the common core network, via a first radio access technology and a second radio interface for communicating with the second mobile access network, and beyond into the common core network, via a second radio access technology.

In this embodiment, radio access nodes 410 communicate with network entity 406 via mobility protocol handling node 414. In this embodiment the mobile nodes are not aware of any mobility protocol. The mobiles nodes do not run MIP client software and their mobility is instead handled by mobility protocol handling node (MPHN) 414.

MPHN 414 may for example use a Proxy Mobile IP (PMIP) protocol such as Proxy Mobile IPv4 protocol (PMIPv4), which provides several benefits. PMIPv4 supports mobility without any modification required to host entities. PMIPv4 can provide mobility for a number of nodes without the need to modify networking stacks and without requiring additional software. PMIPv4 can help to reduce signalling overhead in the network as multiple mobile nodes can be aggregated on the same tunnel. PMIPv4 allows support for mobility between heterogeneous wireless link technologies.

PMIPv4 enables a node which does not have MIP functionality to move across access networks. In PMIPv4, other network nodes provide the mobility support on behalf of the mobility unaware device. There are many IPv4 devices which do not have or cannot be enabled with MIP functionality. The PMIPv4 scheme is based on an external network node acting as a proxy mobile node that registers the location of the device and maintains reachability while the device is on the network. In PMIPv4, a MPHN is known as a Mobility Proxy Agent (MPA) network entity.

The MPHN offers proxy mobility services for mobile nodes by performing registration functions on their behalf. The MPHN functionality may be combined with any access point, base station, access router or access gateway entities in the network.

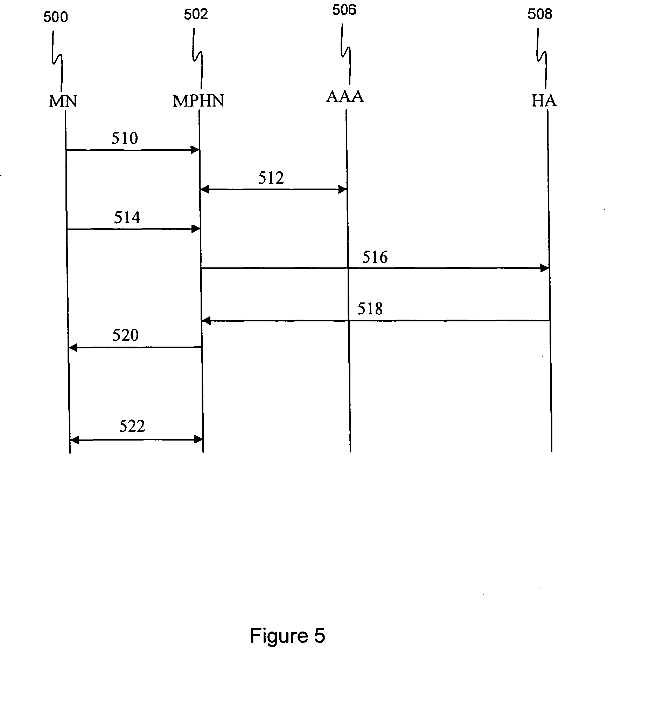

Figure 5 shows an exemplary registration message sequence where mobile node 500 registers with MPHN 502, i.e. mobility protocol handling node 502. Mobile node 500 can connect to MPHN 502 using one of several connection protocols, for example Point to Point Protocol (PPP) or Dynamic Host Configuration Protocol (DHCP).

Step 510 involves mobile node 500 initiating communication with MPHN 502. MPHN 502 then exchanges 512 Authentication Authorisation Accounting (AAA) messages with AAA server 506 in the network to perform authentication and authorisation of mobile node 502. As part of this step AAA server 506 may download information about mobile node 500, for example user profile, handset type, assigned home agent address, and other capabilities of the mobile node. Mobile node 500 then sends 514 an Internet Protocol Control Protocol (IPCP) 'Config request' message to MPHN 502 in the case of PPP being used to request an IPv4 address, or a 'DHCP Discovery' message in the case of DHCP being used.

Upon receiving message 514, MPHN 502 sends a MIPv4 registration request to home agent 508 in step 516. Home agent 508 registers the mobile node's session and assigns a home address (HoA). Home Agent 518 then transmits the HoA to MPHN 502 in a proxy registration reply message 518.

Upon receiving message 518, MPHN 502 transmits a message 520 to mobile node 500 to suggest the IPv4 address which is the HoA allocated by home agent 518. In the case of PPP being used for connection, message 520 could be in the form of an 'IPCP Config-NAK' message. In the case of DHCP being used for connection message 520 could be in the form of a 'DHCP Offer' message with the IPv4 address set equal to the received HoA. Mobile node 500 is then able to exchange regular IPCP Network Control Protocol messages 522 with MPHN 502. The IP stack of mobile node 500 is then ready to send and receive IP packets. In the case of DHCP being used, messages 522 may be in the form of 'DHCP Request' or 'DHCP Ack' message exchanges and the mobile node's IP stack is configured with the assigned IPv4 address.

In the further embodiment of the invention, the mobile node does not understand or handle any mobility protocol. Instead, the MPHN performs monitoring of the user data traffic sent and received by a particular mobile node. The MPHN is responsible for making decisions as to which interface a mobile node should use. Once a decision has been made, MPHN sends a command to the mobile node to de-activate or to activate an interface. Thus, the activity of dynamic interface selection based on user data traffic is delegated to the MPHN. This embodiment thus offers the benefits of removing the processing load required for dynamic interface selection from a mobile node, which in turn can lead to simpler and hence cheaper mobile node hardware.

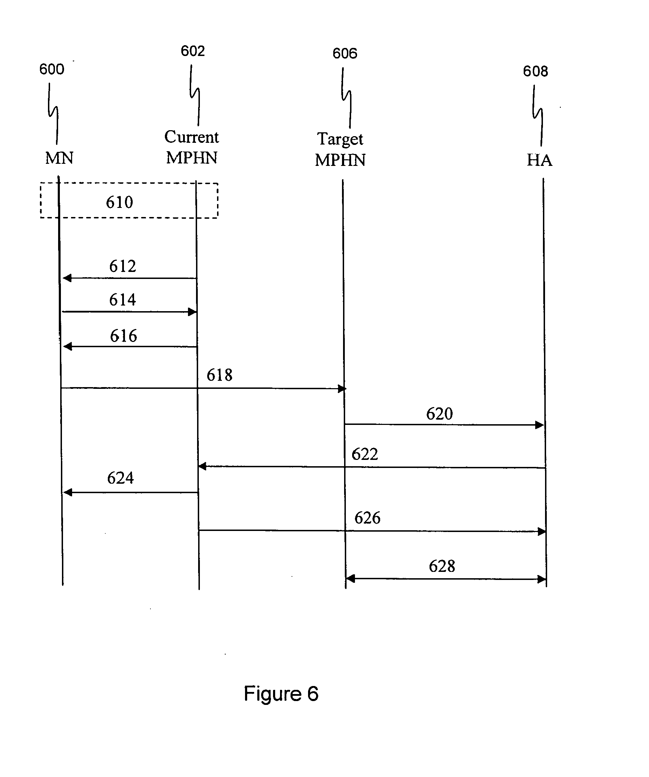

Deactivation of the first radio interface on a mobile node is now discussed. For the purposes of this example, the MPHN that a mobile node has been sending/receiving user data traffic through on its first radio interface is called the current MPHN. The current MPHN monitors the user data traffic of the mobile node, for example using the mobile node's HoA. The steps involved in the de-activation of the first radio interface on a mobile node as a command or instruction received from the current MPHN are illustrated in Figure 6.

Current MPHN 602 constantly monitors 610 the level of user data traffic for mobile node 600. If current MPHN 602 notices that mobile node 600 is not sending or receiving any user data traffic for a certain period of time, MPHN 602 initiates the interface selection on mobile node 600 by sending an 'IPCP Config' or 'DHCP Req' message 612 to mobile node 600. In response, mobile node 600 advertises 614 to current MPHN 602 its list of available access networks. Current MPHN 602 selects another interface such as the mobile node's second radio interface which is to be registered on a target MPHN 606. Current MPHN 602 then sends a command message 616 to mobile node 600 to instruct mobile node 600 to initiate a proxy Mobile IP registration using the target network available via the second radio interface.

In response to command message 616, mobile node 600 sends an 'IPCP Req' or 'DHCP Discovery' message 618 to MPHN 606 in the target network. Target MPHN then uses PMIPv4 to initiate registration 620 of the second radio interface on mobile node 600 with home agent 608 in the target network. Home agent 608 transmits a 'PMIPv4 Registration revocation' message 622 to the current (now previous) MPHN 602, which in turn sends a command 624 to mobile node 600 to turn off its first radio interface. The current (now previous) MPHN 602 responds to the 'PMIPv4 Registration revocation' message by transmitting an acknowledging 'PMIPv4 Registration Ack' message 626 to home agent 608. The interface selection process is then completed by home agent 608 transmitting a 'PMIPv4 Registration Reply' message 628 to target MPHN 606.

If the first radio interface on a mobile node is a relatively high bandwidth interface, for example a WLAN interface, it will tend to use more power than a lower bandwidth interface such as a GPRS or 3G interface. Commanding a mobile node to de-activate the first radio interface in this way thus allows saving of precious battery resources on the mobile node. The less demanding interface, whose care of address has been registered with PMIP may stay switched on for the mobile node to be reachable and to avoid any disruption of data flow to and from the mobile node.

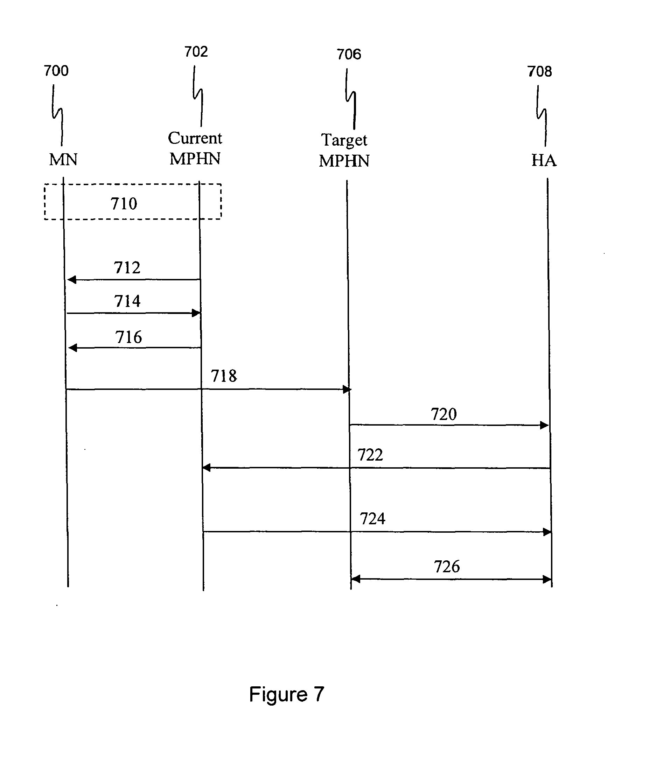

Activation of the first radio interface on a mobile node is now discussed. For the purposes of this example, the first radio interface on a mobile node has been deactivated, i.e. is turned off, and the mobile node can send and receive data via its second radio interface. The steps involved in the activation of the first radio interface on a mobile node as a command or instruction received from the current MPHN are illustrated in Figure 7. As before, the current MPHN 702 monitors 710 user data traffic sent and received by mobile node 700.

When current MPHN 702 notices that mobile node 700 has started to send or receive traffic for a certain period of time, it initiates interface selection on mobile node 700, by sending an 'IPCP Config' or 'DHCP Req' message 712 to mobile node 700. Mobile node 700 responds with an 'IPCP Ack'or 'DHCP 'Ack' message 714 if it has a second radio interface available. Current MPHN then sends a command 716 instructing mobile node 700 to turn on its second radio interface and to initiate registration 718 using its target network. This registration would usually take place over the first radio interface once it is activated, but could alternatively take place over the second radio interface before it is deactivated. Registration of the target MPHN 706 and revocation of the current MPHN 702 is shown by steps 720, 722, 724 and 726 in a similar manner to steps 620, 622, 626 and 628 respectively as described above.

As the first radio interface uses more power than the second radio interface, commanding the mobile node to activate the first radio interface when the mobile node is sending or receiving traffic through the current network is intended to improve the mobile node data throughput. This can be of use when a higher data rate, bandwidth and/or Quality of Service (QoS) is required by a mobile node than can be provided via the current interface.

The above embodiments are to be understood as illustrative examples of the invention. Further embodiments of the invention are envisaged. For example, selection may be performed on the basis of parameters other than simply whether user data traffic is to be sent, for example signal strength.

In the above embodiments of the invention, the mobile node implements on its second radio interface an IEEE 802.11 WLAN standard (examples include variants of the 802.11 standard such as IEEE 802.11 a, IEEE 802.11b, IEEE 802.11 g). Alternatively, or in addition, a mobile node may implement on its second radio interface an IEEE 802.16 standard (examples include variants of the 802.16 standard such as IEEE 802.16a, IEEE 802.16b, IEEE 802.16g). The 802.16 standards relate to a non-cellular radio access technology commonly referred by the term WiMax™, which is a trademark of the WiMax Forum.

This technique is intended to save battery lifetime of small devices such as Laptops, PDAs or Smartphones which use an implementation of Mobile IP. However, the dynamic selection of radio interfaces presented in this technique could apply to mobility protocols other than MIP. In general it could apply to any protocol that requires the mobile node to communicate with one or several network entities whether the mobile node is active or not.

Different embodiments may be combined such that some mobile nodes in an access network comprise MIP clients, i.e. are MIP compliant, and other mobile nodes do not comprise MIP clients, i.e. are not MIP compliant and must employ the services of one or more mobility protocol handling nodes.

In the further embodiment described above, the functionality of one or more radio access nodes and one or more mobility protocol handling nodes may be combined into a single network node.

Figures 1 and 4 only show one application server, but more than one application server may equally be employed to provide communications services to the mobile nodes.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of controlling a mobile node in a data communications network including a plurality of different radio access technologies, the mobile node including:
a first radio interface for communicating via a first radio access technology; and
a second radio interface for communicating via a second radio access technology,
the mobile node having an application requiring the mobile node to communicate user data traffic with a remote node, said user data traffic being capable of being communicated via both said first radio interface and said second radio interface,
wherein the method comprises:
using a mobility protocol for managing mobility of the mobile node between different access nodes, the mobility protocol requiring communication of mobility protocol data traffic with a network entity;
preferentially selecting between said first and second radio interfaces when each of said first and second radio access technologies have coverage available to said mobile node,
wherein said method comprises:
communicating via said first radio interface when there is said user data traffic being communicated, the first radio interface having been selected according to a first preferential selection; and
altering the preferential selection from said first radio interface to said second radio interface in response to a trigger indicating a change in said user data traffic being communicated, whilst mobility protocol data traffic remains to be communicated.

2. A method according to claim 1, wherein said preferential selection is based on one or more parameters including a preference setting, the method comprising switching between:
a first mode in which said first radio interface has a higher preference setting than said second radio interface; and
a second mode in which said second radio interface has a higher preference setting than said first radio interface.

3. A method according to claim 2, wherein said preference setting is in the form of a level of priority.

4. A method according to claim 3, wherein said level of priority is settable by a user, at least in said first mode.

5. A method according to any preceding claim, wherein said first radio interface is a non-cellular wireless radio interface and said second radio interface is a cellular wireless radio interface.

6. A method according to any preceding claim, wherein said mobility protocol data traffic comprises communications for maintaining a registration with said network entity.

7. A method according to claim 6, wherein said mobility protocol is a Mobile Internet Protocol.

8. A method according to any preceding claim, wherein said trigger is a trigger indicating a halt in said user data traffic being communicated.

9. A method according to any preceding claim, wherein the mobility of said mobile node is managed by a MIP client function.

10. A method according to any preceding claim, wherein said user data traffic being communicated to and from said mobile node is monitored by a monitoring function.

11. A method according to claim 10, wherein said monitoring comprises said monitoring function communicating with said application.

12. A method according to any of claims 9 to 11, wherein said trigger is generated by said MIP client function.

13. A method according to claim 12, wherein said trigger generation is in response to an enquiry from said monitoring function.

14. A method according to any of claims 9 to 13, wherein said MIP client function is located in said mobile node.

15. A method according to any preceding claim, wherein said mobility protocol data traffic is capable of being communicated via both said first radio interface and said second radio interface.

16. A method according to any preceding claim, wherein said preferential selection is performed in said mobile node.

17. A method according to any of claims 1 to 13, wherein said MIP client function is located in a mobility protocol handling node remote to said mobile node.

18. A method according to claim 17, wherein said mobility protocol handling node is responsible for managing the mobility of said mobile node between different access nodes.

19. A method according to claim 17 or 18, wherein said monitoring function is located in said mobility protocol handling node.

20. A method according to any of claims 17 to 19 wherein said preferential selection is performed in said mobility protocol handling node.

21. A method according to any of claims 17 to 20, wherein said mobility protocol handling node communicates with said network entity using said mobility protocol.

22. A method according to any of claims 17 to 21, wherein said mobility network node communicates with said mobile node using a different protocol to said mobility protocol.

23. A method according to claim 22, wherein said different protocol comprises Internet Protocol Control Protocol (IPCP) and/or Dynamic Host Configuration Protocol (DHCP).

24. A method of controlling a mobile node in a data communications network including a plurality of different radio access technologies, the mobile node including:
a first radio interface for communicating via a first radio access technology; and
a second radio interface for communicating via a second radio access technology,
wherein each of said first and second radio interfaces are assigned a priority, indicative of an order in which the radio interfaces are to be selected,
the method comprising dynamically updating said priority order in response to a trigger.

25. A method of controlling a mobile node in a data communications network including a plurality of different radio access technologies, the mobile node including:
a first radio interface for communicating via a first radio access technology; and
a second radio interface for communicating via a second radio access technology,
the mobile node having an application requiring the mobile node to communicate user data traffic with a remote node, said user data traffic being capable of being communicated via both said first radio interface and said second radio interface,
wherein the method comprises:
using a mobility protocol for managing mobility of the mobile node between different access nodes, the mobility protocol requiring communication of mobility protocol data traffic with a network entity;
at a mobility protocol handling node, monitoring user data traffic being communicated between said mobile node and said remote node; and
in response to said monitoring indicating a change in an amount of said user data traffic being communicated, transmitting a command from said mobility protocol handling node to said mobile node, said command indicating to said mobile node to switch on or switch off the power to one of said first or second radio interfaces.

26. A method according to claim 25, wherein a further command is transmitted from said mobility protocol handling node, said further command indicating to said mobile node to switch on or switch off the power to the other of said first and second radio interfaces.

27. A method according to claim 25, wherein said command and said further command are combined into a single command transmitted from said mobility protocol handling node to said mobile node.

28. A method according to any of claims 25 to 27, wherein said first radio interface is a relatively high power interface compared to said second radio interface.

29. A method according to any of claims 25 to 28, wherein said change is a reduction in the amount of user data traffic being communicated.

30. A method according to any of claims 25 to 29, wherein said change is a halt in the amount of user data being communicated.

31. A method according to any of claims 25 to 30, wherein said command indicates to said mobile node to switch off said first radio interface.

32. A method according to any of claims 25 to 29, wherein said command indicates to said mobile node to switch on said second radio interface.

33. A method according to any of claims 25 to 28, wherein said change is an increase in the amount of user data traffic being communicated.

34. A method according to claim 33, wherein said command indicates to said mobile node to switch on said first radio interface.

35. A method according to claims 33 or 34, wherein said further command indicates to said mobile node to switch off said second radio interface.

36. A method according to any of claims 25 to 35, wherein said mobility protocol handling node communicates with said network entity using said mobility protocol.

37. A method according to claim 36, wherein said mobility protocol is the Proxy Mobile IPv4 protocol.

38. A method according to any of claims 25 to 37, wherein said mobility protocol handling node communicates with said mobile node using a protocol different to said mobility protocol.

39. A method according to any of claims 25 to 38, wherein said command and/or said further command are transmitted using said different protocol.

40. A method according to claim 38 or 39, wherein said different protocol comprises the Internet Protocol Control Protocol (IPCP) and/or the Dynamic Host Configuration Protocol (DHCP).

41. A mobile node adapted to conduct the method of any preceding claim.

42. A mobile protocol handling node adapted to conduct the method of any preceding claim.

43. Apparatus adapted to perform the method of any preceding claim.

44. Computer software adapted to perform the method of any preceding claim.
